# EUROPEAN PATENT APPLICATION

(11) **EP 4 567 907 A1**
(43) Date of publication of application: **11.06.2025**
(21) Application number: 23214561.5
(22) Date of filing: 06.12.2023
(51) Int. Cl.: H01M 4/04, B26D 7/08, B26F 3/00, H01G 11/84, H01M 10/04

(54) **METHODS FOR MANUFACTURING A COMPONENT FOR AN ENERGY STORAGE DEVICE AND DEVICES THEREFOR**

(71) Applicant: CUSTOMCELLS Holding GmbH, 25524 Itzehoe (DE)
(72) Inventor: Otepov, Sultan, Itzehoe (DE)
(74) Representative: LKGLOBAL Lorenz & Kopf Patentanwalt Attorney at Law PartG mbB

(57) **Abstract**

A first aspect of this disclosure is related to a method for manufacturing a component of an energy storage device,
comprising the steps:
- obtaining a metal/substrate-foil with two layers, a layer comprising an alkali metal and a layer comprising a substrate;
- cutting the metal/substrate-foil with a sonotrode blade in at least two parts;
- providing at least one of the parts for further processing.

## Description

### Technical Field

This disclosure is related to methods for manufacturing components for energy storage devices and to devices for performing a method for manufacturing components for energy storage devices.

### Background

Lithium/substrate-foil is a composite material used in lithium-ion batteries, in particular for pre-lithiation and/or as a lithium metal anode. As a lithium metal anode it can combine the high energy density of lithium foil with the conducting and mechanical properties of a suitable metal substrate to enable the safe and efficient operation of rechargeable lithium-ion batteries, which are commonly used in a wide range of portable electronic devices, electric vehicles, and energy storage systems.

The cutting of lithium, or any other soft material, can be challenging because Lithium is a soft material. Therefore, it can stick to conventional cutting tools. This can contaminate the cutting tools.

Internal observations revealed that cutting lithium-based foils or other alkali or alkaline-earth-metal-based foils can contaminate electrodes and the calendering equipment used in pre-lithiation process (alkali and alkaline earth metals are referred to as alkali metals in the remainder). Calendering is a critical step in the direct-contact pre-lithiation of electrodes for lithium-ion batteries. Calendering equipment can be used to 1) ensure contact between lithium layer and electrode, and 2) activate the protected lithium film for the reaction with the electrode. Frequent exchanging and/or cleaning of the cutting tools (blades, disc blades) in an industrial equipment adds unnecessary downtimes and operational costs. Due to corrosive effect of the alkali metals comprised in metal/substrate-foils, the cutting tools cannot be used after a few times of cleaning. Furthermore, loose soft metal particles can increase risk of fire in the production due to their flammability. Improvements in this field are desirable.

### Summary

An object of embodiments of this disclosure is to improve a manufacturing of electrical storage devices, in particular a processing of alkali metal foils.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of this disclosure is related to a method for manufacturing a component of an energy storage device, comprising the steps:
- obtaining a metal/substrate-foil with two layers, a layer comprising an alkali metal and a layer comprising a substrate;
- cutting the metal/substrate-foil with a sonotrode blade in at least two parts;
- providing at least one of the parts for further processing.

An energy storage device in the sense of the present disclosure can be every device that comprises an alkali metal and/or alkaline earth metal. An energy storage device can be a battery, e.g. a lithium-ion battery, or a capacitor, e.g. a lithium-ion-capacitor, a super-capacitor, or an ultra-capacitor.

An obtaining a metal/substrate-foil in the sense of this disclosure can comprise receiving and/or a fetching of this information. Additionally or alternatively, this can comprise determining this information based on other received/fetched information.

A metal/substrate-foil can refer to a thin and/or sheet-like material, wherein a part (e.g. a first layer) is made of metal and another part (e.g. a second layer) is made of a substrate. In the context of this disclosure, it comprises an alkali metal film deposited onto a substrate foil, that is rolled or processed into a very thin and flexible sheet. This foil can be used e.g. for current collectors and/or electrodes within the battery, as well as for pre-metalation of electrodes. The substate foil is covered on at least one side by an alkali and/or an alkaline earth metal layer, which results in a two-layer structure.

An alkali metal in the sense of this disclosure can comprise metals from the first and second main group, such as alkali metals and alkaline earth metals. Examples comprise lithium, sodium, potassium, magnesium, calcium. (Real) alkali metals and alkaline earth metals are normally soft metals.

A metal/substrate-foil can be formed of one or more layers of metal, substrate and/or other layers. A layer, e.g. a substrate, can be applied as a flat, continuous surface. A substrate can comprise an electrical function, such as a conductive layer and/or a mechanical function, such as a protective and/or a supportive layer. A layer can consist of a thin film of a material, ranging from a few nanometers to micrometers in thickness. A layer can be applied as a coating to a surface of another layer. For example, a metal layer can be applied as a coating of a metal (layer). Coatings can come in various forms, such as, e.g., paint, varnish, and/or powder coatings. Metal/substrate-layers can come as laminates. Laminates comprise multiple layers of materials bonded together. Laminates can also be referred to as, e.g. "composite layer" or "multi-layer". Laminates can also be provided in a matrix, e.g. an alkali metal can be provided as a matrix in which a substrate layer is embedded, or vice versa. A metal/substrate layer can be provided as a multilayer stack in which layers are stacked on top of each other, while each layer can be serving a specific purpose. For example, a metal/substrate-layer can comprise one or more layers of conductive and insulating materials. Additionally or alternatively, a metal/substrate-layer can be provided as a patterned and/or structured multi-layer layer, i.e. one, some, or more layers of the metal/substrate are intentionally patterned and/or structured to provide specialized functions. One or more layers of a metal/substrate can be textured, comprise a gradient, adhesive, insulating, mechanically flexible, etc.

A substrate can be made of metals, such as aluminum (Al) and/or copper (Cu), stainless steel, zinc (Zn), and/or their alloys. Additionally or alternatively, a substrate can be made of plastics, such as polyethylene terephthalate (PET), polyethylene (PE), polypropylene (PP), polylactic acid (PLA), polyvinyl chloride (PVC), polyamide (PA), and/or polyurethane (PU). Copper can be used as a substrate for the anode (negative electrode), e.g., in lithium-ion batteries. It can provide mechanical support and electrical conductivity to the anode material, which is typically composed of a lithium-ion intercalation material (e.g., graphite). Aluminum can be used as a substrate for the cathode (positive electrode), e.g. in lithium-ion batteries. It can serve a similar purpose as copper foil for the cathode material, which may consist of lithium cobalt oxide (LiCoO2) or other cathode materials. Plastics, e.g., polymer substrates, can be flexible substrates that can be used instead or in combination of metal foils, e.g. for lithium-ion batteries.

A providing of a part of a metal/substrate-foil in the sense of this disclosure can comprise sending and/or storing the metal/substrate-foil for others to fetch.

Thicknesses of metal/substrate foils can be, e.g. ca 10 to 50 µm. Incoming metal/substrate, e.g. Li/PET-material can be in the form of rolls, which needs further cutting in order to use for batteries. The cutting of foils can be challenging because the soft alkali metal can stick to conventional cutting tools. This can corrode the cutting tool, contaminate electrodes, contaminate the calendaring equipment, and increase the risk of fire due to the flammability of alkali metal particles.

The sonotrode blade is configured to vibrated at high frequencies and cuts through a soft material without leaving burs or sticking to it. Thereby, a processing of alkali metal foils for manufacturing of electrical batteries is improved.

An embodiment of the first aspect of this disclosure is related to a method for manufacturing a component of an electrical battery,
wherein the substrate comprises plastic and/or metal.

A substrate can comprise a plurality of materials, either as a mono-material layer or as a composite layer. Each material can provide in particular electrical and/or mechanical functions. A substrate can comprise metal, such as copper and aluminum. These foils provide good electrical conductivity, mechanical strength, and flexibility. Copper foils can be used in particular in lithium-ion batteries. Aluminum foils can be used in particular in lithium-ion and/or lithium-polymer batteries. Additionally or alternatively, a substrate can comprise steel, in particular stainless steel. Stainless steel provides good chemical resistance and mechanical durability. Additionally or alternatively, a substrate can comprise nickel, e.g. for nickel-metal hydride (NiMH) batteries. Nickel offers good electrical conductivity and corrosion resistance.

A substrate can comprise carbon-based materials, such as graphite sheets, carbon cloth, or/or carbon paper. Additionally or alternatively, a substrate can comprise one or more plastics and/or polymer substates. Such substrates are in particular suited to provide flexibility and are lightweight. Examples of such substrates are polyethylene terephthalate (PET) or polyimide-based plastics. Additionally or alternatively, a substrate can comprise one or more ceramic materials, such as alumina (aluminum oxide). Ceramics can be used as substrates in order to provide thermal and chemical stability and electrical insulation. Additionally or alternatively, glass-based substrates can be used, in particular to provide a metal/substrate with isolating and/or optical properties.

For example, lithium-ion batteries may use aluminum as the substrate for the cathode (positive electrode) and copper for the anode (negative electrode) due to their conductivity and compatibility with the battery chemistry. For flexible and thin-film batteries polymer or plastic substrates may be used to achieve flexibility and form factor advantages.

An embodiment of the first aspect of this disclosure is related to a method for manufacturing a component of an electrical battery,
comprising the steps:
   - receiving the metal/substrate-foil on a roll;
   - unrolling the metal/substrate-foil in a first direction;
wherein the cutting is done at the unrolled metal/substrate-foil and parallel to the first direction.

Metal/substrates-foils on a roll, also referred to as metal foil rolls or metal foil sheets, can facilitate an automatic production process of battery components such as electrodes. Rolls of metal/substrate-foils can be different in size, thickness, and material to suit specific needs. In particular metal/substrate-roles can have a size related to a standard width of a battery electrode, e.g., 150 - 200 mm. For example, a metal/substrate-role can be provided at a multiple size of a width of a standard electrode, e.g. 600 mm.

In a specific embodiment, a method according to the first aspect can comprise the steps:
- combining an alkali metal layer with a PET layer to the metal/substrate-foil;
- storing the metal/PET-foil on a roll;
- cutting the metal/PET foil parallelly to the roll direction into different metal substrate foils.

These different metal/PET foils can afterwards each be stored on a separate roll. This can facilitate further processing of a cut metal/substrate-foil. This procedure can also be performed with other substrates.

An embodiment of the first aspect of this disclosure is related to a method for manufacturing a component of an electrical battery,
wherein the metal/substrate-foil is cut at a plurality of locations.

A metal/substrate foil can be provided in a width larger than needed for a specific battery component. In particular a metal/substrate foil can be provided with a width of a multiple of a required size, e.g., an electrode width, of a battery component. In such a case, the metal/substrate-foil can be cut at a plurality locations. The cutting at a plurality locations can be performed serially and/or parallelly. For example, a metal/substrate-foil can be provided with a width of four times a required width for a battery component. Then this metal/substrate-foil can be cut by three parallelly arranged sonotrode blades into four separate metal/substrate-foils.

An embodiment of the first aspect of this disclosure is related to a method for manufacturing a component of an electrical battery,
wherein the metal/substrate-foil is cut such that the substrate layer is cut prior to the metal layer.

A metal/substrate foil can be provided to a sonotrode cutting system such that one or more blades cut the foil starting at the substrate layer and cut the metal layer afterwards. Since alkali metals are soft materials, this cutting procedure avoids deforming the metal layer while cutting the foil.

An embodiment of the first aspect of this disclosure is related to a method for manufacturing a component of an electrical battery,
comprising the steps:
   - receiving the metal/substrate-foil on a roll;
   - unrolling the metal/substrate-foil in a first direction;
wherein the cutting is done at the unrolled metal/substrate-foil and perpendicular to the first direction.

Perpendicular cutting can in particular be performed if a metal/substrate-sheet for a battery component with a pre-defined length and width. Perpendicular cutting can be performed after parallel cutting. The result of such a process can be stored on a roll again (if the perpendicular cutting still yields metal/substrate-sheets long enough for rolled storage). Additionally or alternatively, the result of such a perpendicular cutting can be stored on a pile of sheets and/or in a matrix/container.

An embodiment of the first aspect of this disclosure is related to a method for manufacturing a component of an electrical battery,
wherein the cutting separates the metal/substrate-foil into a useful part and into a waste part.

The waste part can be separated from a source metal/substrate-foil by parallel and/or perpendicular cutting.

An embodiment of the first aspect of this disclosure is related to a method for manufacturing a component of an electrical battery,
comprising the step:
- after cutting, rolling up one or more parts of the metal/substrate-foil to one or more rolls.

This enables a roll-to-roll or a roll-to-rolls process, by which source metal/substrate-foil from a roll is stored after cutting on one or more rolls for further processing.

An embodiment of the first aspect of this disclosure is related to a method for manufacturing a component of an electrical battery,
wherein the cut parts are led away from the cutter in different angles.

In an example, a source metal/substrate-foil comes from a roll and is parallelly cut into more than two resulting metal/substrate-foils. The cutting can be performed by cutters arranged in a line perpendicular to a rolling direction of the metal/substrate foil. After being cut it is desirable to avoid that the cut foil sheets, or foil webs contact each other again. Such a contact can, e.g. be caused by oscillations of the cut foil sheets induced by the cutting. To void this, the cut sheets can be guided away from the cutter in different angles.

An embodiment of the first aspect of this disclosure is related to a method for manufacturing a component of an electrical battery,
wherein the metal/substrate-foil is led over one or more deflector reels, before and/or after the cutting.

By a deflector reel a pre-defined tension can be provided to a metal substrate foil before and/or after cutting. Thereby, an oscillation of the foil can be reduced and cutting can be facilitated. In particular a pre-defined can be selected such that the soft metal of the metal/substrate-foil is not stretched or deformed in any way. This can also be avoided by an appropriate selection of substrate. Hence, the pre-defined tension imposed by one or more deflector reels can be depending on a metal and/or on substrate of a metal/substrate-foil. Pre-defined tension can be provided by a reflector reel with a drive and/or a break. A drive to the metal/substrate foil can be provided by rewinder shafts, while the unwinder shaft(s) is/are equipped with breaks.

An embodiment of the first aspect of this disclosure is related to a method for manufacturing a component of an electrical battery,
wherein the metal/substrate-foil is led over a deflector reel with the substrate side touching the deflector reel.

This can be done on order to avoid a deforming of the soft metal of a metal/substrate-foil. In particular, the blades of a sonotrode cutting system can be on the same side as the deflector reels of the system. In this case, a metal/substrate-foil can be led over the blades/reels with the substrate side facing to the blades/reels in order to achieve a good cutting result and to reduce deformations on the metal side of the metal/substrate-foil.

Additionally or alternatively, one or more deflector reels can have a diameter larger than 10 cm in order to not deform the metal layer of a metal/substrate-foil.

The method can be performed in inert atmosphere for additional safety. The parts of the equipment that may come into contact with the metal/substrate-foil, such as the reels, should be made from a material that is chemically resistant to alkali corrosion (e.g., anodized Al, high Cr content steel, etc.). In addition, the static electricity buildup should be minimized by a controlled discharging.

A second aspect of this disclosure is related to a device for manufacturing a component of an energy storage device
configured to
- obtain a metal/substrate-foil with two layers, a layer comprising an alkali metal and a layer comprising a substrate;
- cut the metal/substrate-foil with a sonotrode blade in at least two parts;
- provide at least one of the parts for further processing.

The device can be configured to execute any one of the features mentioned in the context of the first aspect.

An embodiment of the second aspect of this disclosure is related to a device for manufacturing a component of an energy storage device,
with a plurality of sonotrode blades arranged such that the metal/substrate-foil is cut into parallel stripes.

In particular if a metal/substrate-foil is provided by a roll, one or more sonotrode blades can be configured such that the foil is cut in several smaller foils by cutting parallelly to the role direction, i.e. parallelly to the direction along which the foiled is conveyed over the blade(s). Then the device can also comprise one or more storage roles for taking on the cut metal/substrate-foils.

Additionally or alternatively, the foil can be cut perpendicular to the role direction. This can be in particular done if the result should be rectangular foil sheets.

An embodiment of the second aspect of this disclosure is related to a device for manufacturing a component of an energy storage device,
wherein at least one of the sonotrode blades is disc-shaped.

Disc-shaped sonotrode blades can come in various forms and configurations. A disc blade can be round, oval, or elliptic. A disc-shaped blade can be a solid or perforated disc blade. A disc blade can be flat, circular and with a uniform thickness throughout its circumference. A disc blade can be toothed or serrated having teeth or notches along its edges. These teeth or serrations can be designed to enhance cutting or grinding efficiency. A disc blade can be scalloped or wavy having a unique shape with alternating concave and convex curves around its edges. A scalloped design helps reduce resistance. A disc blade can be a blade comprising with a sharp edge, in particular to cut through the soft alkali metal.

An embodiment of the second aspect of this disclosure is related to a device for manufacturing a component of an energy storage device,
wherein the disc-shaped blade is configured to rotate in the direction of cutting.

Rotating of a disc-shaped cutting blade in the direction is defined for the part of the disc that cuts through a metal/substrate-foil. Generation of burr can be minimized if the cutting part of the disc rotates in the direction in which the disc cut the foil.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates a device for manufacturing electrode material for electrodes of an energy storage device such as an electrical battery according to an embodiment of this disclosure.
Fig. 2 illustrates a device for processing a metal/substrate-foil, e.g. for electrodes of an electrical battery, according to an embodiment of this disclosure.
Fig. 3 illustrates a device for cutting a metal/substrate-foil according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

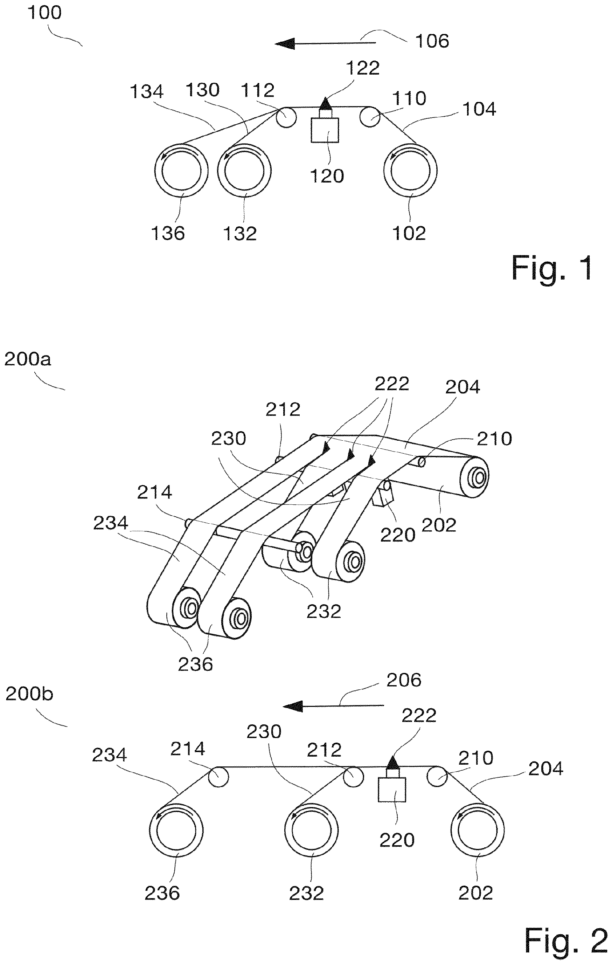

Fig. 1 illustrates a device for manufacturing electrode material for electrodes of an electrical battery according to an embodiment of this disclosure in a lateral view 100. A metal/substrate foil is provided by a source roll 102. The metal/substrate-foil 104 is led from the source roll to a first deflector reel 110. The first deflector reel is configured to lead the metal/substate-foil to a sonotrode blade system 120. The sonotrode blade system comprises a sonotrode blade 122 that is configured to cut the metal/substrate-foil while it is conveyed from the first deflector reel 110 to a second deflector reel 112. Thereby, it cuts the metal/substrate-foil into a first part 130 and a second part 134. The cut is performed parallelly to the transport direction 106 of the foil. After the cut the cut parts 130 and 134 of the metal/substrate-foil 104 are stored on rolls for further processing. The first part 130 of the cut foil is stored on roll 132 and the second part 134 is stored on roll 136.

Fig. 2 illustrates a system for processing a metal/substrate-foil, e.g. for electrodes of an electrical battery, according to an embodiment of this disclosure. The illustration comprises a perspective view 200a of the system and a lateral view 200b of the system. The functioning of the system is similar to the device illustrated in Fig. 1, but the device is configured to provide more output.

A metal/substrate foil 204 is provided on a storage roll 202. The foil is unrolled from the roll 202 and guided over a first deflector reel 210 to a sonotrode cutter. The deflector reel has a diameter sufficiently large to not deform the soft alkali metal of the metal/substrate foil, e.g. the diameter can be larger than 10cm, 20cm, or 30cm. The sonotrode blade system 220 comprises three parallelly arranged sonotrode blades 222. The sonotrode blades are configured to cut the metal/substrate-foil parallel to the transport direction 206 of the foil. This results in four separate metal/substrate-foils of a pre-defined width. Therefore, the sonotrode blades can be varied in their distance to each other. The distance of the sonotrode blades to each other can be adjusted by hand and/or by a servo motor. Based on the latter, an automatic adjustment of a metal/substrate foil can be implemented. In particular, the adjustment can be varied during a cutting a metal/substrate-roll from a single roll. This can provide cut metal/substrate-foils with different width.

After the cutting the separate-metal substrate-foils are further guided over two further deflector reels, a second deflector reel 212 and a third deflector reel 214. Thereby, two cut metal substrate foils 230 are guided with a different angle than the two remaining cut metal/substrate-foils 234. The first two cut metal/substrate-foils 230 are provided to two different rolls 232 arranged right after and below the sonotrode blade system 220. Therefore, they are guided in a steep angle to the rolls 232 below after the second deflector reel 212. The direction of the remaining to cut foils 234 is not changed after the second deflector reel 212. Their direction is changed after the are guided over the third deflector reel 214 to the two foils 236.

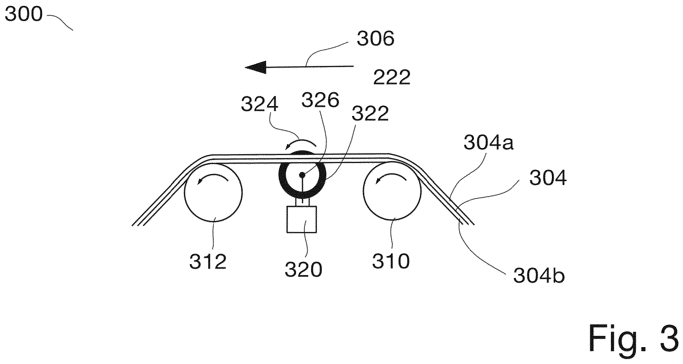

Fig. 3 illustrates a device 300 for cutting a metal/substrate-foil according to an embodiment of this disclosure. A metal/substrate-foil 304 consists of an alkali metal layer 304a and a substrate layer 304b. The alkali metal layer can comprise lithium and/or natrium. The substrate layer can comprise plastic (e.g., PET) or a metal (e.g. copper).

The metal/substrate-film 304 is guided over the first deflector reel 310 to move it to the 320. The sonotrode device comprises a disc-shaped blade 322 that cuts the metal/substrate-foil in two parts parallelly to the transport direction 306. The sonotrode blade is configured to rotate in the direction 324 around the rotation center 326. Thereby, the upper part of the blade moves into the transport direction which is caused by the movement of the deflector reels. By such a movement the blade can cut smoothly through the metal/substrate-foil. After the cutting the two parts are further guided over a second deflector reel 312.

The metal/substrate-foil 304 is guided over the deflector reels such that the substrate layer 304b touches the deflector reels. Thereby, a deformation of the soft alkali metal layer 304a can be avoided or at least reduced. Furthermore, the sonotrode blade cuts through the metal/substrate-foil such that the substrate layer is cut before the alkali metal layer. This can also increase the quality of the cut and in particular reduces contamination of the blade by metal burr.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: device for manufacturing electrodes material
- 102: source roll
- 104: metal substrate-foil
- 106: transport direction
- 110: first deflector reel
- 112: second deflector reel
- 120: sonotrode blade system
- 122: blade
- 130: cut foil
- 132: roll for cut foil
- 134: cut foil
- 136: roll for cut foil
- 200a: perspective view
- 200b: side view
- 202: source roll
- 204: metal substrate-foil
- 206: transport direction
- 210: first deflector reel
- 212: second deflector reel
- 214: third deflector reel
- 220: sonotrode blade system
- 222: blades
- 230: cut foils
- 232: rolls for cut foils
- 234: cut foils
- 236: rolls for cut foils
- 300: disc-cutting-device
- 304: metal substrate foil
- 304a: alkali metal
- 304b: substrate
- 306: transport direction
- 310: first deflector reel
- 312: second deflector reel
- 320: sonotrode device
- 322: disc blade
- 324: direction of rotation
- 326: center of rotation

## Claims

1. A method for manufacturing a component for an energy storage device, comprising the steps:
- obtaining a metal/substrate-foil (104) with two layers, a layer comprising an alkali metal (304a) and a layer comprising a substrate (304b);
- cutting the metal/substrate-foil with a sonotrode blade (122) in at least two parts (130, 134);
- providing at least one of the parts for further processing.

2. The method according to the preceding claim,
wherein the substrate (304b) comprises plastic and/or metal.

3. The method according to one of the preceding claims,
comprising the steps:
- receiving the metal/substrate-foil (104) on a roll (102);
- unrolling the metal/substrate-foil in a first direction (106);
wherein the cutting is done at the unrolled metal/substrate-foil and parallel to the first direction.

4. The method according to one of the preceding claims,
wherein the metal/substrate-foil (104) is cut at a plurality of locations (222).

5. The method according to one of the preceding claims,
wherein the metal/substrate-foil (104) is cut such that the substrate layer (304b) is cut prior to the metal layer (304a).

6. The method according to one of the preceding claims,
comprising the steps:
- receiving the metal/substrate-foil (104) on a roll (102);
- unrolling the metal/substrate-foil in a first direction (106);
wherein the cutting is done at the unrolled metal/substrate-foil and perpendicular to the first direction.

7. The method according to one of the preceding claims,
wherein the cutting separates the metal/substrate-foil (104) into a useful part and into a waste part.

8. The method according to one of the preceding claims,
comprising the step:
- after cutting, rolling up one or more parts (130, 134) of the metal/substrate-foil to one or more rolls (132, 136).

9. The method according to one of the preceding claims,
wherein the cut parts (130, 134) are led away from the cutter (122) in different angles.

10. The method according to one of the preceding claims,
wherein the metal/substrate-foil (104) is led over one or more deflector reels (110, 112), before and/or after the cutting.

11. The method according to the preceding claim,
wherein the metal/substrate-foil (104) is led over a deflector reel (110, 112) with the substrate side (304b) touching the deflector reel.

12. A device for cutting metal-based foil for a component of an energy storage device,
configured to
- obtain a metal/substrate-foil (104) with two layers, a layer comprising an alkali metal (304a) and a layer comprising a substrate (304b);
- cut the metal/substrate-foil (104) with a sonotrode blade(122) in at least two parts (130, 134);
- provide at least one of the parts for further processing.

13. The device according to the preceding claim,
with a plurality of sonotrode blades (222) arranged such that the metal/substrate-foil (104) is cut into parallel stripes (230, 234).

14. The device according to the preceding claim,
wherein at least one of the sonotrode blades (322) is disc-shaped.

15. The device according to the preceding claim,
wherein the disc-shaped blade (322) is configured to rotate in the direction of cutting (324).
